# EUROPEAN PATENT APPLICATION

(11) **EP 0 987 616 A2**
(43) Date of publication of application: **22.03.2000**
(21) Application number: 99304119.3
(22) Date of filing: 27.05.1999
(51) Int. Cl.: G05G 9/047, G06K 11/18

(54) **Control device**

(30) Priority: 14.09.1998 GB 9820026
(71) Applicant: Penny & Giles Computer Products Ltd., Christchurch, Dorset BH23 3TE (GB)
(72) Inventor: Higbee, Derek, Ringwood, Hampshire BH24 2JA (GB)
(74) Representative: Purvis, William Michael Cameron

(57) **Abstract**

A control device 1 having certain components that are isolated from contact with an operator or the external environment, and one or more remaining components that may come into contact with the operator or the external environment. The isolated components are preferably provided within a first housing 9, and the remaining components are preferably provided within a second housing 7.

## Description

This invention rclates to control devices, and in one illustrative embodiment to a pointing device.

Since the advent of computers and other computer controlled devices. there have been proposed a variety of different mechanisms for the control thereof. First computers were provided with a keyboard by means of which instructions could be inputted into the computer. Later computers were provided with graphical-user-interfaces (GUI's) by means of which a user could control functions of a computer by selecting options from drop-down menus of the particular interface employed. Control of such interfaces with a keyboard, whilst usually possible, was typically inconvenient. To address this problem, various pointing devices have been proposed. One such pointing device is the so-called "mouse" which comprises a rollable ball which bears upon rollers within a casing to generate signals representative of the movement of the ball by a user.

Mice, whilst being convenient, suffer from the problem that they typically require a relatively large surface in which to be operated correctly as they must be moved from one position to another to generate the above mentioned signals. In order to alleviate this problem, it has been proposed to use so-called trackerballs which may be thought of as an inverted mouse. A trackerball typically comprises a housing which is provided with a cavity that is capable of accepting a rollable ball therein. Typically a pair of sensing devices are provided within the housing that abut against the ball and generate signals when the ball is moved in any given direction. These signals are outputted to the computer or other electronic equipment connected thereto and are used to control a pointer on the screen thereof. Trackerballs are also typically provided with one or more buttons by means of which functions on the computer can be selected.

In a sterile hospital or medical environment, it is commonplace nowadays for a variety of different electronic machines to be employed. Previously, these machines have been controlled by way of keyboards, but it would be highly desirable to provide the same degree of ease of operation to these machines as is currently available with modern computers. To this end, it has been proposed to use pointing devices such as a mouse or trackerball with these machines to select options from drop-down menus on screens connected thereto.

However, a problem exists in that equipment utilised in a sterile hospital or medical environment must be sterilised, for example by autoclaving, in order to ensure that no bacteria is lurking in the machines which could possibly be transmitted to the patient to cause infection. To this end, conventional previously proposed pointing devices such as mice and trackerballs would not be suitable for use in a sterile medical environment as the entire device would have to be sterilised to kill bacteria. Such sterilising could irrevocably damage the electronic components within the pointing device thus rendering it useless.

Further problems are apparent when trackerballs are used in other technical fields and environments. For example, if a trackerball is to be used in a dusty, dirty or moisture-rich industrial environment, then it has been found that the dust, dirt or moisture can find its way into the pointing device where it can damage the electronics and other components thereof. It has also been noted that it is typically difficult to clean the interior of a pointing device, for example, once it has been dirtied.

It is an object of aspects of the present invention to address these and other problems associated with the prior art.

In accordance with an aspect of the invention, there is provided a control device having certain components that are isolated from contact with an operator or the external environment. and one or more remaining components that may come into contact with the operator or the external environment. Preferably, said remaining components are removable from the device.

Preferably, those components that are isolated from the operator or the external environment are provided within a first housing, and those remaining components that may come into contact with the operator or the external environment are provided within a second housing fittable to the first. The second housing may be fittable into a cavity formed in the first housing.

At least some of those components that are isolated may be heat sensitive and not suitable for sterilisation by a heat trcatment such as autoclaving. The remaining components may be non-heat sensitive and suitable for sterilisation by a heat treatment such as autoclaving.

Preferably, there is no mechanical connection between said isolated components and said remaining components.

Preferably, at least a rollable body and a pair of rotatable shafts are provided within the second housing. Each of said shafts may comprise an elongate arm. Preferably, said pair of rotatable shafts are positioned in said second housing such that a major axis of one shaft is at right angles to a major axis of the other shaft. At least one end of each of said shafts may be connected to a magnetic assembly.

Preferably, said first housing is provided with at least a pair of magnetic assemblies, one or more of said first housing assemblies being provided adjacent to each of said shaft magnetic assemblies when said second housing is fitted to said first housing.

Preferably, said shaft magnetic assemblies each comprise a support fitted to an end of said arm and magnet means connected to said support. Preferably, said first housing magnetic assemblies each comprise a support to which magnet means are connected.

Each of the supports provided in the first housing may be connected to a rotatable drive shaft, each drive shaft being connected to sensing means for sensing rotation of said drive shaft and for outputting signals indicative thereof. Each of said shaft magnetic assemblies may be attracted towards a respective one of said first housing magnetic assemblies, and vice versa. Preferably, said rollable body abuts against said rotatable shafts in use. Preferably, the other end of each of said shafts is engageable with a respective mounting formed in a wall of the second housing.

Alternatively, the other end of each of said shafts may be connected to a second magnetic assembly, each of said second magnetic assemblies being located in use adjacent to a further rotatable magnetic assembly provided within the first housing. Preferably, the second shaft magnetic assemblies each comprise a support having magnet means provided thereon.

The magnet means may comprise an annular bar magnet or a plurality of magnets arranged in a ring.

Preferably, the first housing is hermetically sealed.

Further aspects of the invention provide a pointing device comprising a device as described herein, a trackerball comprising a device as described herein and an item of electronic equipment comprising a device as described herein.

Embodiments of the invention will now be described by way of example only with reference to the accompanying Figurcs in which:
Figure 1 is a cross-sectional view through a trackerball according to a first embodiment of the invention;
Figure 2 is a plan view partly in cross-section along the line A--A of Figure 1;
Figure 3 is an enlarged view of a section of the trackerball of Figure 1;
Figure 4 is a cross-sectional view through a second embodiment of trackerball according to the invention; and
Figure 5 is a cross-sectional view of various sterilisable and fixed parts of the trackerball of the second embodiment.

It should be noted that, whilst embodiments to be described herein relate to a trackerball incorporated in an item of equipment, the invention is not limited thereto. A skilled person will immediately realise that teachings of embodiments of the invention are equally applicable to stand-alone trackerballs that are not associated with any one particular piece of equipment. Skilled persons will also realise that embodiments of the invention may find utility in other technical fields where one is not concerned with sterilising the device, but where one simply wishes to protect internal components of the device from the external environment.

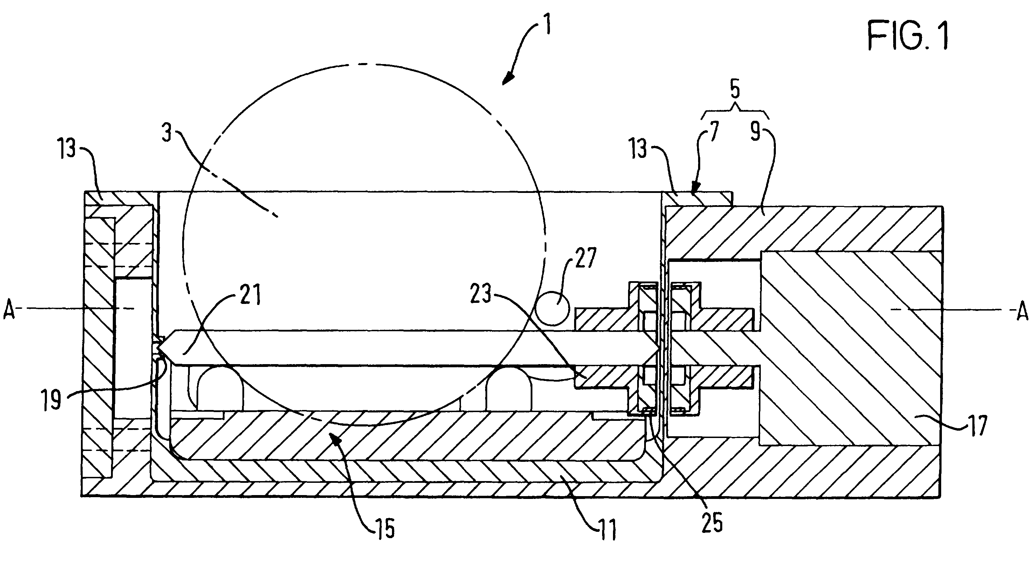

As mentioned above, Figure 1 is a cross-sectional view through a trackerball 1 according to a first embodiment of the invention. The trackerball 1 is located in an exterior wall of an item of electronic equipment (not shown), and comprises a rollable ball 3 that is mounted in a housing 5 comprising an inner body 7 and an outer body 9. All of the components provided within the inner body 7 are removable from the outer body 9.

Thus it can be seen that all of the components which may come into contact with personnel operating the apparatus (and thus which are potentially open to contamination by bacteria) may be removed. The removed components can then be sterilised, for example by autoclaving.

The inner body 7 comprises a dish shaped member 11 that has a flanged upper edge 13. A supporting member 15 is provided within the dish shaped member 11, and functions to support the rollable ball 3 and various other components of the trackerball 1. The flanged edge 13 serves to cover at least a portion of the outer body 9, when the inner body 7 is located therein, thereby isolating at least that portion of the outer body from contact with the user. If the pointing device is not mounted in an item of equipment (i.e. if the pointing device is free-standing), then the flanged edge may extend to form a cover that envelops the upper surface and upstanding sides of the outer body 9. If the pointing device is mounted in an item of equipment, then the extent of the flanged edge can be reduced.

A lid (not shown) is provided to cover the inner body 7 and to prevent the ball 3 from falling out of the trackerball 1. The lid has a circular aperture provided therein through which a portion of the ball may project.

The outer body may be hermetically sealed so as to prevent unwanted contaminants (such as dirt, dust or moisture for example) from entering the outer body where they could possibly damage components housed therein.

Control electronics generally designated by reference numeral 17 are provided in the outer body 9. An end support 19 is formed in one wall of the inner body 7 and is. in this embodiment, capable of engaging with one end of a shaft 21 provided within the inner body 7. The other end of the shaft 21 is located in a housing 23 within which a first magnet 25 is provided. The first magnet 25 and housing 23 are rotatable in unison with the shaft 21.

A second shaft 27 (shown in cross-section) is provided at right angles to the first shaft 21. The construction of the second shaft and the manner in which it operates is identical to that of the first shaft 21 and thus, for brevity, the constructions of the second shaft 27 will not be further described herein.

The first and second shafts, upon rotation of the ball. cause signals indicative of movement in first and second directions perpendicular to one another to be generated. In this respect, the operation of the trackerball (i.e. the means by which those signals are generated) is similar to currently available devices and thus will not be further described herein.

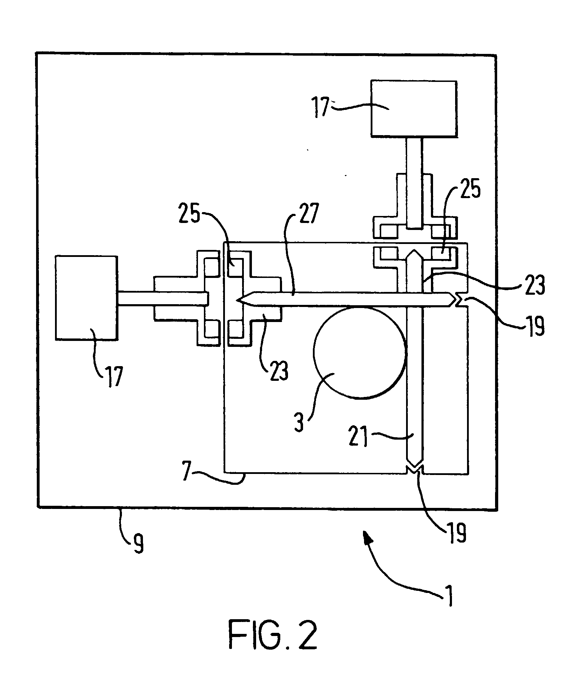

Figure 2 is a plan view partly in cross-section along the line A--A of Figure 1. From Figure 2, it can clearly be seen that the first and second shafts are provided at right angles to one another to generate signals representative of movement in first and second directions, respectively, that are perpendicular to one another.

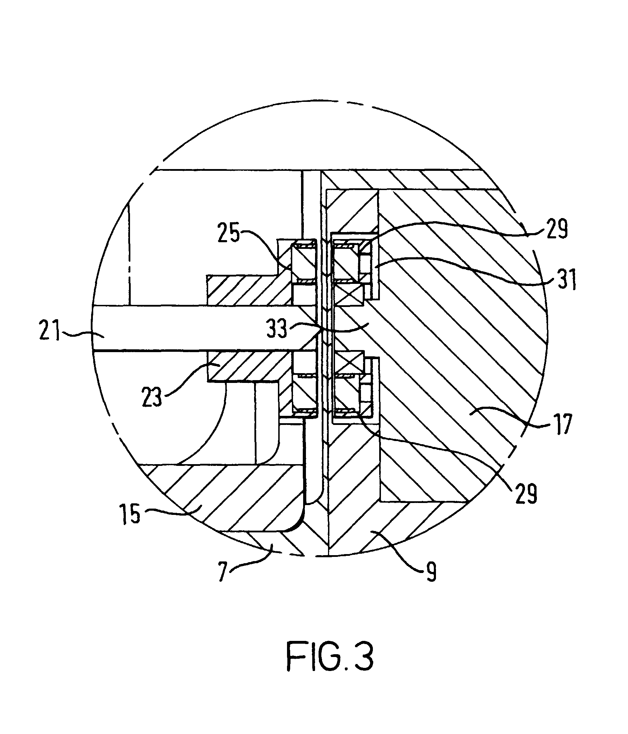

Figure 3 is an enlarged view of the end section of the first shaft 21 shown in Figure 1. As previously mentioned, the shaft 21 engages with a housing 23 within which the first magnet 25 is provided. The first magnet preferably comprises an annular magnet with north and south poles aligned along the axis of the shaft 21. Alternatively, the first magnet may comprise a plurality of individual magnets arranged in a ring. Outside of the inner body 7, there is provided a second magnet assembly connected to the control electronics 17 in the outer body 9. The second magnet assembly comprises an annular magnet 29 that is housed in a similar housing 31 to that of the first magnet 25. The second magnet 29 is identical to the first magnet 25 and is arranged such that the north and south poles thereof are aligned with those of the first magnet to cause the first and second magnets to be attracted to one another.

The second magnet assembly is connected to a drive shaft 33 that is in turn connected to the control electronics 17 such that rotation of the drive shaft 33 gives rise to signals indicative of movement of the magnet assembly and drive shaft 33, and hence the shaft 21.

Thus it can be seen that movement of the first shaft 21 will, by the attractive magnetic force between the two magnets 25,29, cause a corresponding movement of the second magnet 29 and attached drive shaft 33. As mentioned above, a similar arrangement is provided for a second shaft 27.

This arrangement enables the rotational movement of the first and second shafts 21.27 to be transmitted to the control electronics 17 without any mechanical connection between the shafts and drive shafts. Due to the lack of any mechanical connection. the inner body 7 and the components provided therein may be removed easily for sterilisation. Thus it is possible to sterilise only those components of the trackerball 1 that are non-temperature sensitive. and which may come into contact with the operator.

The magnets and associated components provide, as described above, a connection-less interface between the shaft 21 and the drive shaft 33. In addition to this. the magnetic assemblies also ensure a good contact between the shafts 21, 27 and the ball 3.

To ensure a good contact between the shafts 21, 27 and the ball 3, the shafts and attached shaft magnetic assemblies are located in the inner housing 7 in such a position that the ball displaces them slightly from alignment with the outer body magnetic assemblies when the ball 3 is located in the inner body. The magnetic force between respective shaft magnetic assemblies and corresponding outer body magnetic assemblies urges the shafts into frictional contact with the rollable ball 3 to improve the frictional contact occurring between the shafts and the ball. The improved frictional contact reduces the likelihood of slippage occurring between the shafts and the ball.

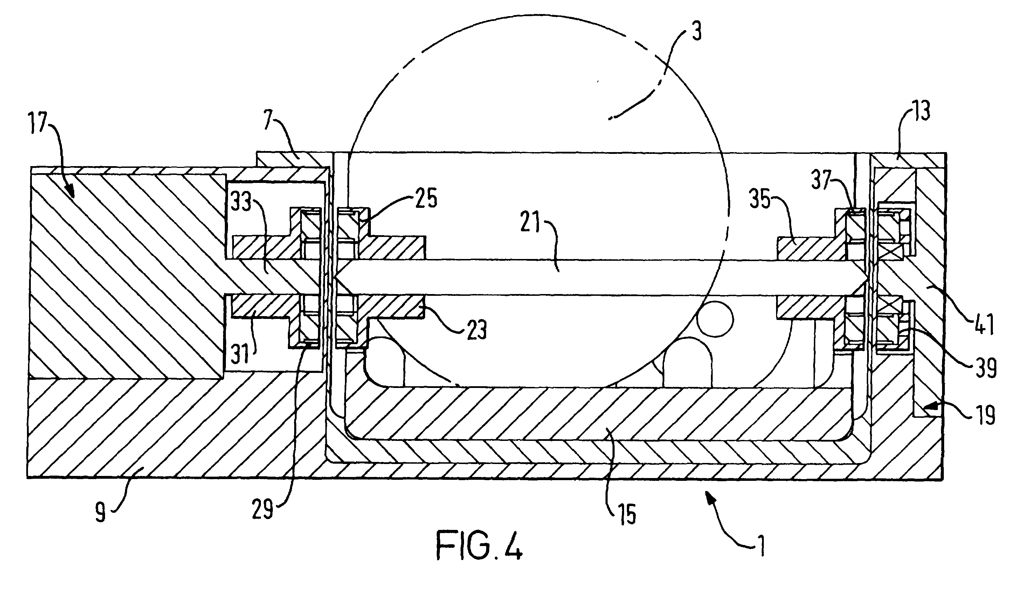

Figure 4 is a cross-sectional view of a trackerball 1 according to a second embodiment of the invention. The second embodiment of the invention is constructed largely in the same manner as the first embodiment of the invention except for the means by which the ends of the shafts 21, 27 furthest from the magnetic assemblies are supported by the outer body 9. Thus, only this region of the shafts 21,27 remotest from the outer body magnetic assemblies will be described.

In this embodiment, the shafts 21,27 are each connected with a respective magnetic assembly as in the first embodiment. The other end of the shaft 21,27 is connected to a housing 35 within which another magnet means 37 is provided. A similar magnet means 39 is provided in the outer body 7 housed in a freely rotatable housing 41. Thus it can been seen that rotation of the shafts 21,27 will cause the magnetic assemblies connected to either end to rotate and the magnetic assemblies provided in the outer body 9 and attracted thereto to rotate in unison therewith.

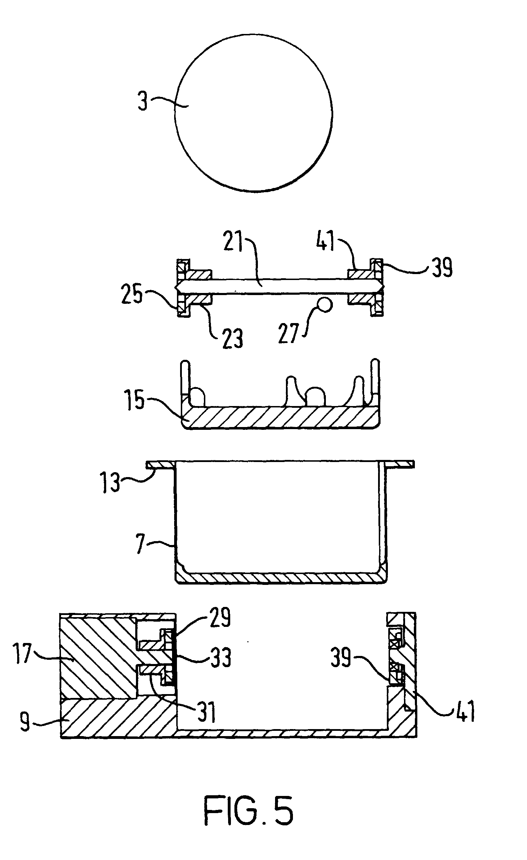

Figure 5 is an exploded view in cross-section of a trackerball I according to an embodiment of the invention showing those parts that are removable and those parts which are fixed to the remainder of the trackerball 1. As shown, the ball 3, shafts 21, 27, supporting member 15 and dish-shaped member 11 may all be removed from the outer body 9.

It will be understood that aspects of the invention have been described herein by way of example only and that modifications may be made without departing from the scope of the invention.

For example, whilst the embodiments described herein relate specifically to a trackerball incorporated in an item of electronic equipment, it will be appreciated that the teachings of the invention may equally well be applied to a free standing trackerball unit discreet from any particular piece of equipment. In addition, the teachings of the invention may also be applied to mice and other pointing devices which employ rollable bodies.

It will furthermore be appreciated that whilst the preferred method of sterilisation is autoclaving, other equivalent methods will be immediately apparent to those persons skilled in the art. Autoclaving, as referred to herein. means heat-treating to a temperature (typically to around 160° C) sufficient to kill bacteria followed by various other known processes.

Furthermore, whilst the embodiments described above relate to a trackerball for use in a sterile medical environment, it will be appreciated that the teachings of the invention may equally well be applied to other technical fields. For example, a pointing device such as that disclosed herein could find great utility in dusty, dirty or moisture-rich industrial environments, for example, where ambient dirt, dust or moisture could damage the internal electronics of conventional pointing devices. The present invention would be advantageous in such an environment as the electronics that are prone to damage are enclosed by the outer body and thus protected - particularly if the outer body is hermetically sealed. If the outer body is hermetically sealed, then the device could even be used underwater.

In addition, whilst in the preferred embodiment the inner housing is located within the outer housing, it will be appreciated that the components of the device could be arranged in such a manner that the inner housing instead lies adjacent to or on top of the outer housing.

Finally, whilst the particular embodiment described herein relates to a pointing device, it will be appreciated that the teachings of the invention may be applied to a variety of different control devices. For example, the control device could simply be used as a switch to turn equipment on or off, rather than a pointing device.

Stated differently, the present invention provides a control device for electronic equipment, comprising a cavity containing a manually rollable input element which is at least partially exposed to the external environment and electronic control components responsive to rotation of the input element, wherein the cavity is lined so as to isolate contamination on the input element from the electronic control components. If the input element is to be used in a sterile environment, the input element is rotatably supported in a removable cavity liner.

## Claims

1. A control device having certain components that are isolated from contact with an operator or the external environment, and one or more remaining components that may come into contact with the operator or the external environment.

2. A device according to Claim 1, wherein said remaining components are removable from the device.

3. A device according to Claim 1 or Claim 2, wherein those components that are isolated from the operator or the external environment are provided within a first housing, and those remaining components that may come into contact with the operator or the external environment are provided within a second housing fittable to the first.

4. A device according to Claim 3, wherein the second housing is fittable into a cavity formed in the first housing.

5. A device according to any of Claims 1 to 4, wherein at least some of those components that are isolated are heat sensitive and not suitable for sterilisation by a heat treatment such as autoclaving.

6. A device according to any preceding claim, wherein the remaining components are non-heat sensitive and suitable for sterilisation by a heat treatment such as autoclaving.

7. A device according to any preceding claim, wherein there is no mechanical connection between said isolated components and said remaining components.

8. A device according to Claim 3 or to any of Claims 4 to 7 when dependent on Claim 3. wherein at least a rollable body and a pair of rotatable shafts are provided within the second housing.

9. A device according to Claim 8. wherein each of said shafts comprises an elongate arm.

10. A device according to Claim 9, wherein said pair of rotatable shafts are positioned in said second housing such that a major axis of one shaft is at right angles to a major axis of the other shaft.

11. A device according to any of Claims 8 to 10, wherein at least one end of each of said shafts is connected to a magnetic assembly.

12. A device according to Claim 11, wherein said first housing is provided with at least a pair of magnetic assemblies, one or more of said first housing magnetic assemblies being provided adjacent to each of said shaft magnetic assemblies when said second housing is fitted to said first housing.

13. A device according to Claim 11 or Claim 12, wherein said shaft magnetic assemblies each comprise a support fitted to an end of said arm and magnet means connected to said support.

14. A device according to Claim 12 or Claim 13, wherein said first housing magnetic assemblies each comprise a support to which magnet means are connected.

15. A device according to Claim 14, wherein each of the supports provided in the first housing are connected to a rotatable drive shaft, each drive shaft being connected to sensing means for sensing rotation of said drive shaft and for outputting signals indicative thereof.

16. A device according to any of Claims 12 to 15, wherein each of said shaft magnetic assemblies are attracted towards a respective one of said first housing magnetic assemblies, and vice versa.

17. A device according to any of Claims 8 to 16, wherein said rollable body abuts against said rotatable shafts in use.

18. A device according to Claim 11 or to any of Claims 12 to 17 when dependent upon Claim 11, wherein the other end of each of said shafts is engageable with a respective mounting formed in a wall of the second housing.

19. A device according to Claim 11 or to any of Claims 12 to 17 when dependent on Claim 11, wherein the other end of each of said shafts is connected to a second magnetic assembly, each of said second magnetic assemblies being located in use adjacent to a further rotatable magnetic assembly provided within the first housing.

20. A device according to Claim 19. wherein said second shaft magnetic assemblies each comprise a support having magnet means provided thereon.

21. A device according to Claim 13, Claim 14 or Claim 20, wherein said magnet means comprises an annular bar magnet.

22. A device according to Claim 13, Claim 14 or Claim 20, wherein said magnet means comprises a plurality of magnets arranged in a ring.

23. A device according to Claim 3 or to any of Claims 4 to 22 when dependent on Claim 3, wherein the first housing is hermetically sealed.

24. A pointing device comprising a device according to any preceding claim.

25. A trackerball comprising a device according to Claim 24.

26. An item of electronic equipment comprising a device according to any of Claims 1 to 23, a pointing device according to Claim 24 or a trackerball according to Claim 25.
